# EUROPEAN PATENT SPECIFICATION

(11) **EP 1 217 829 B1**
(45) Date of publication and mention of the grant of the patent: **07.09.2005**
(21) Application number: 02075118.6
(22) Date of filing: 18.06.1993
(51) Int. Cl.: H04N 5/14, H04N 7/01

(54) **Picture signal processing mode control**
Bildsignalverarbeitungsmodussteuerung
Contrôle de mode de traitement de signal d'image

(30) Priority: 26.06.1992 EP 92201895
(43) Date of publication of application: 26.06.2002
(62) Divisional of application: 93201752.8
(73) Proprietor: Koninklijke Philips Electronics N.V., 5621 BA Eindhoven (NL)
(72) Inventor: De Haan, Gerard, 5656 AA Eindhoven (NL); Huijgen, Hendrik, 5656 AA Eindhoven (NL); Biezen, Paul Willem Albert Cornelis, 5656 AA Eindhoven (NL); Ojo, Olukayode Anthony, 5656 AA Eindhoven (NL)
(74) Representative: Steenbeek, Leonardus Johannes

(56) References cited:
- EP-A- 0 359 334
- GB-A- 2 240 232
- US-A- 4 864 398
- US-A- 4 881 125

## Description

The invention relates to a method of and apparatus for controlling a picture signal processing mode. The invention further relates to a television signal receiver including such a picture signal processing mode controlling apparatus.

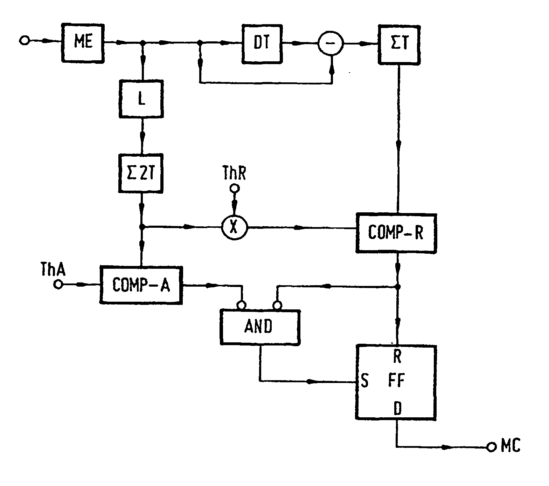

A problem met in Improved Definition Television (IDTV) receivers is that motion-compensated picture signal processing methods are potentially very suitable to provide an improved display quality of the picture signal, but that artifacts caused by motion vector estimation errors are very disturbing. Consequently, there is a need to determine when motion vectors are reliable enough to allow for a motion-compensated picture signal processing mode, and when the motion-compensated picture signal processing mode should be switched off in view of the unreliability of the motion vectors.
US-A-4,864,398 discloses a television standards converter comprising a motion analyzer for analyzing the motion between consecutive fields of an input television signal. Its Fig. 12 shows a comparator receiving motion vectors from three consecutive fields to determine some erroneous conditions and some picture content information. From the comparison it can be determined whether the motion of an object stopped, whether there has been a motion vector calculation error, or whether there exists a continuous motion.

It is, *inter alia*, an object of the invention to provide a simple and reliable picture signal processing control. For this purpose, the invention provides a picture signal processing control as well as a receiver for television signals using such a picture signal processing control signal, as defined in the independent claims. Advantageous embodiments of the invention are defined in the subclaims.
The invention is based on the recognition that when a comparison of motion vectors estimated for the same spatial positions in first and second fields shows that they differ to a large extent, these vectors will not be very reliable so that it is advantageous to switch over to a non-motion-compensated processing mode.
These and other aspects of the invention will be apparent from and elucidated with reference to the embodiments described hereinafter.

The drawing shows an embodiment of an apparatus in accordance with the present invention for determining whether the picture signal processing should be motion-compensated. More specifically, the drawing shows an embodiment of an arrangement which determines whether the motion vectors are reliable enough to allow for a motion-compensated processing mode. The picture signal is applied to the motion vector estimator ME. The motion vectors estimated by the motion vector estimator ME are applied to a length determining circuit L, which may determine the true length of the motion vectors by taking the root of the sum of the squares of horizontal and vertical components of the motion vectors, or which may simply sum these components. The output of the length determining circuit L is applied to a first summing circuit Σ_{2T} which determines a sum of motion vectors of two subsequent field periods. This sum is a measure of the amount of activity in the picture signal and is thus called the activity signal. The output of the first summing circuit Σ_{2T} is compared to an activity threshold ThA by an activity comparator COMP-A to obtain an activity enable signal. The arrangement will only switch over to the motion-compensated picture signal processing mode when the motion vectors are small enough to warrant a reasonably reliable decision, *i.e*. when the activity enable signal is logic zero.
The output of the motion vector estimator ME is also applied to a field delay circuit DT. The difference between the input and the output of the field delay circuit DT is applied to a second summing circuit Σ_{T} which determines the sum of the differences between the motion vectors of the present field period and the motion vectors of a previous field period for corresponding spatial positions. The output of the second summing circuit Σ_{T} is applied to a first input of a comparator COMP-R, whose second input is coupled to the output of the first summing circuit Σ_{2T} through a multiplier which multiplies the activity signal by a reliability threshold ThR. It is thereby ensured that a decision that the motion vectors are not reliable enough to allow for a motion compensated picture signal processing mode is only taken if the sum of the vector length differences divided by the activity signal exceeds the reliability threshold ThR. The output of the comparator COMP-R is coupled to a reset input R of a set-reset flipflop FF. The output of the comparator COMP-R is also coupled to an inverting input of a logic AND-circuit whose other inverting input receives the activity enable signal from the comparator COMP-A. The output signal of the logic AND-circuit is only logic one if the summed vector differences are small enough and if the activity signal is below the activity threshold ThA. The output of the logic AND-circuit is coupled to the set input S of the set-reset flipflop FF. The data output D of the flipflop FF supplies a motion-compensated processing mode indication signal MC.

While a hard switching between a motion-compensated picture signal processing mode and a non-motion-compensated picture signal processing mode has been described, it will be obvious that a soft switching is possible as well. In that case, the outputs of the first summing circuit Σ2T and the second summing circuit ΣT could be advantageously applied to a read-only memory for determining an attenuation factor for the motion vectors. If the summed temporal differences between the motion vectors for corresponding spatial positions were too high, the attenuation factor would be zero so that the picture signal processing would effectively be non-motion-compensated. On the other hand, if the summed temporal differences were within the normal range, the motion vectors would be applied unattenuated. When the motion vectors differences are a little out of the normal range, the motion vectors could be attenuated by, for example, halving the amplitudes of the motion vector components. By such a soft switching, switching artifacts between the two processing modes are avoided.

The above description clearly shows that a simple comparison of motion vectors determined for successive fields can easily be used to determine the picture signal processing mode and, more specifically, whether the motion vectors are reliable enough to allow for a motion-compensated picture signal processing. The comparisons are preferably related to the total amount of motion in the picture, which can very simply be determined by adding the motion vector lengths of a television frame period. After a switch-off of the motion-compensated processing mode because the motion vectors appeared to vary too much in time to be reliable, the motion-compensated processing mode is preferably only reinstalled when the amount of motion during a frame period has fallen below a certain activity threshold to warrant a reliable decision.

## Claims

1. A method of generating picture signal processing mode control signals for motion compensation (MC), the method comprising the steps of:
determining (ME) first motion vectors for a first field, and second motion vectors for a successive second field; and
comparing (DT,-) said first and second motion vectors estimated for same spatial positions in the first and second fields to obtain vectors differences for said spatial positions; **characterized by**
summing (ΣT) said vector differences to obtain vector difference sum signals;
determining (L, Σ2T) an amount of motion in the picture signal; and
generating (COMP-R, COMP-A, AND, FF) picture signal processing mode control signals for motion compensation (MC) in dependence on the vector difference sum signals and the amount of motion in the picture signal.

2. A method as claimed in claim 1, wherein
said determining step comprises determining (L, Σ2T) a sum of lengths of said first and second motion vectors to obtain said amount of motion in the picture; and
said generating step includes changing (COMP-A, AND, FF) said picture signal processing control mode signals (MC) only when said amount of motion in the picture has a predetermined relation (COMP-A) with an activity threshold (ThA).

3. A method as claimed in claim 2, wherein said picture signal processing mode control signals (MC) are changed to indicate a motion-compensated picture signal processing mode when said amount of motion in the picture falls (COMP-A) below said activity threshold (ThA), while said picture signal processing control signal (MC) is changed to indicate a non-motion-compensated picture signal processing mode when the vector difference sum signals exceed (COMP-R) a reliability threshold (ThR).

4. A method as claimed in claim 1, wherein said generating step comprises the step of applying said amount of motion in the picture and said vector difference sum signals to a read-only memory for determining said picture signal processing mode control signals including an attenuation factor for attenuating said motion vectors.

5. An apparatus for generating picture signal processing mode control signals for motion compensation, the apparatus comprising:
means (ME) for determining first motion vectors for a first field, and second motion vectors for a successive second field; and
means for comparing (DT,-) said first and second motion vectors estimated for same spatial positions in the first and second fields to obtain vectors differences for said spatial positions; **characterized by**
means for summing (ΣT) said vector differences to obtain vector difference sum signals;
means for determining (L, Σ2T) an amount of motion in the picture signal; and
means for generating (COMP-R, COMP-A, AND, FF) picture signal processing mode control signals for motion compensation (MC) in dependence on the vector difference sum signals and the amount of motion in the picture signal.

6. An apparatus as claimed in claim 5, wherein
said determining means comprise means for determining (L, Σ2T) a sum of lengths of said first and second motion vectors to obtain said amount of motion in the picture; and
said generating means include means for changing (COMP-A, AND, FF) said picture signal processing control mode signals (MC) only when said amount of motion in the picture has a predetermined relation (COMP-A) with an activity threshold (ThA).

7. An apparatus as claimed in claim 6, wherein said picture signal processing mode control signals (MC) are changed to indicate a motion-compensated picture signal processing mode when said amount of motion in the picture falls (COMP-A) below said activity threshold (ThA), while said picture signal processing control signal (MC) is changed to indicate a non-motion-compensated picture signal processing mode when the vector difference sum signals exceed (COMP-R) a reliability threshold (ThR).

8. An apparatus as claimed in claim 5, wherein said generating means comprise a read-only memory for determining said picture signal processing mode control signals including an attenuation factor for attenuating said motion vectors in dependence on said amount of motion in the picture and said vector difference sum signals.

9. A receiver for television signals, comprising:
means for receiving and decoding said television signals to obtain picture signals;
means coupled to said receiving and decoding means for enhancing said picture signals;
**characterized in that** said enhancing means include an apparatus for generating picture signal processing mode control signals as defined in claim 5.

## Patentansprüche

1. Verfahren zum Erzeugen von Bildsignalverarbeitungsmodussteuersignalen zur Bewegungskompensation (MC), wobei dieses Verfahren die nachfolgenden Verfahrensschritte umfasst:
- das Ermitteln (ME) erster Bewegungsvektoren für ein erstes Halbbild, und zweiter Bewegungsvektoren für ein nachfolgendes zweites Halbbild; und
- das Vergleichen (DT,-) der ersten und der zweiten Bewegungsvektoren geschätzt für dieselben räumlichen Stellen in dem ersten und in dem zweiten Halbbild zum Erhalten von Vektordifferenzen für die genannten räumlichen Stellen; **gekennzeichnet durch**:
- Summierung (ΣT) der genannten Vektordifferenzen zum Erhalten von Vektordifferenzsummensignalen;
- Ermittlung (L, Σ2T) eines Betrags an Bewegung in dem Bildsignal und
- Erzeugung (COMP-R, COMP-A, AND, FF) von Bildsignalverarbeitungsmodesteuersignalen zur Bewegungskompensation (MC) in Abhängigkeit von den Vektordifferenzsummensignalen und dem Betrag an Bewegung in dem Bildsignal.

2. Verfahren na 1, wobei
- der genannte Ermittlungsschritt die Ermittlung (L, Σ2T) einer Summe von Längen der genannten ersten und zweiten Bewegungsvektoren zum Erhalten des genannten Betrags an Bewegung in dem Bild umfasst; und
- der genannte Erzeugungsschritt die Änderung (COMP-A, AND, FF) der genannten Bildsignalverarbeitungssteuermodesignale (MC) nur dann, wenn der genannte Betrag an Bewegung in dem Bild mit einer Aktivitätsschwelle (ThA) eine vorbestimmte Beziehung (COMP-A) hat.

3. Verfahren na 2, wobei die genannten Bildsignalverarbeitungsmodesteuersignale (MC) geändert werden um eine bewegungskompensierte Bildsignalverarbeitungsmode anzugeben, wenn der genannte Betrag an Bewegung in dem Bild unter die genannte Aktivitätsschwelle (ThA) sinkt (COMP-A), während das genannte Bildsignalverarbeitungssteuersignal (MC) geändert wird um eine nicht-bewegungskompensierte Bildsignalverarbeitungsmode anzugeben, wenn die Vektordifferenzsummensignale eine Zuverlässigkeitsschwelle (ThR) übersteigen (COMP-R).

4. Verfahren na 1, wobei der genannte Erzeugungsschritt den Schritt der Zuführung des genannten Betrags an Bewegung in dem Bild und der genannten Vektordifferenzsummensignale zu einem ROM zur Bestimmung der genannten Bildsignalverarbeitungsmodesteuersignale einschließlich eines Dämpfungsfaktors zur Dämpfung der genannten Bewegungsvektoren.

5. Anordnung zur Erzeugung von Bildsignalverarbeitungsmodesteuersignale zur Bewegungskompensation, wobei diese Anordnung Folgendes umfasst:
- Mittel (ME) zur Bestimmung erster Bewegungsvektoren für ein erstes Halbbild, und zweite Bewegungsvektoren für ein nachfolgendes zweites Halbbild; und
- Mittel zum Vergleichen (DT,-) der genannten ersten und zweiten Bewegungsvektoren geschätzt für dieselben räumlichen Stallen in dem ersten und dem zweiten Halbbild zum Erhalten von Vektordifferenzen für die genannten räumlichen Stellen; **gekennzeichnet durch**
- Mittel zum Summieren (ΣT) der genannten Vektordifferenzen zum Erhalten von Vektordifferenzsummensignalen;
- Mittel zum Ermitteln (L, Σ2T) eines Betrags an Bewegung in dem Bildsignal und
- Mittel zum Erzeugen (COMP-R, COMP-A, AND, FF) von Bildsignalverarbeitungsmodesteuersignalen zur Bewegungskompensation (MC) in Abhängigkeit von den Vektordifferenzsummensignalen und dem Betrag an Bewegung in dem Bildsignal.

6. Anordnung na 5, wobei
- die genannten Bestimmungsmittel Mittel aufweisen zum Bestimmen (L, Σ2T) einer Summe von Längen der genannten ersten und zweiten Bewegungsvektoren zum Erhalten des genannten Betrags an Bewegung in dem Bild, und
- die genannten Erzeugungsmittel Mittel aufweisen zum Ändern (COMP-R, COMP-A, AND, FF)der genannten Bildsignalverarbeitungssteuermodesignale (MC) nur dann, wenn der genannte Betrag an Bewegung in dem Bild eine vorbestimmte Beziehung (COMP-A) mit einer Aktivitätsschwelle (ThA) hat.

7. Anordnung na 6, wobei die genannten Bildsignalverarbeitungsmodesignale (MC) geändert werden um eine bewegungskompensierte Bildsignalverarbeitungsmode anzugeben, wenn der genannte betrag in dem Bild unter die genannte Aktivitätsschwelle (ThA) sinkt (COMP-A), während das genannte Bildsignalverarbeitungssteuersignal (MC) geändert wird um eine nicht-bewegungskompensierte Bildsignalverarbeitungsmode anzugeben, wenn die Vektordifferenzsummensignale (COMP-R) eine Zuverlässigkeitsschwelle (ThR) übersteigen.

8. Anordnung na 5, wobei die genannten Erzeugungsmittel einen ROM enthalten zum Bestimmen der genannten Bildsignalverarbeitungsmodesteuersignale mit einem Dämpfungsfaktor zur Dämpfung der genannten Bewegungsvektoren in Abhängigkeit von dem genannten Betrag an Bewegung in dem Bild und der genannten Vektordifferenzsummensignale.

9. Empfänger für Fernsehsignale, wobei dieser Empfänger die nachfolgenden Elemente umfasst:
- Mittel zum Empfangen und Decodieren der genannten Fernsehsignale zum Erhalten von Bildsignalen;
- Mittel, die mit den genannten Empfangs- und Decodiermitteln gekoppelt sind zum Verbessern der genannten Bildsignale,
**dadurch gekennzeichnet, dass** die genannten Verbesserungsmittel eine Anordnung aufweisen zum Erzeugen von Bildsignalverarbeitungsmodesteuersignalen, wie in Anspruch 5 definiert.

## Revendications

1. Procédé pour générer des signaux de commande de mode de traitement de signal d'image à compensation de mouvement (MC), le procédé comprenant les étapes consistant à:
déterminer (ME) des premiers vecteurs de mouvement pour une première trame et des deuxièmes vecteurs de mouvement pour une deuxième trame suivante, et
comparer (DT,-) lesdits premiers et deuxièmes vecteurs de mouvement qui sont estimés pour les mêmes positions spatiales dans les première et deuxième trames pour obtenir des différences de vecteurs pour lesdites positions spatiales; **caractérisé par**
la sommation (ET) desdites différences de vecteur pour obtenir des signaux de sommation de différence de vecteur;
la détermination (L, Σ2T) d'un degré de mouvement dans le signal d'image; et
la génération (COMP-R, COMP-A, AND, FF) de signaux de commande de mode de traitement de signal d'image à compensation de mouvement (MC) dépendamment des signaux de sommation de différence de vecteur et du degré de mouvement dans le signal d'image.

2. Procédé selon la revendication 1, dans lequel
ladite étape de détermination comprend la détermination (L, Σ2T) d'une somme de longueurs desdits premiers et deuxièmes vecteurs de mouvement pour obtenir ledit degré de mouvement dans l'image; et
ladite étape de génération comprend le changement (COMP-A, AND, FF) desdits signaux de mode de commande de traitement de signal d'image à compensation de mouvement (MC) seulement lorsque ledit degré de mouvement dans l'image présente une relation prédéterminée (COMP-A) avec un seuil d'activité (ThA).

3. Procédé selon la revendication 2, dans lequel lesdits signaux de commande de mode de traitement de signal d'image à compensation de mouvement (MC) sont changés pour indiquer un mode de traitement de signal d'image à compensation de mouvement lorsque ledit degré de mouvement dans l'image baisse (COMP-A) au-dessous dudit seuil d'activité (ThA) alors que ledit signal de commande de traitement de signal d'image à compensation de mouvement (MC) est changé pour indiquer un mode de traitement de signal d'image à non-compensation de mouvement lorsque les signaux de sommation de différence de vecteur dépassent (COMP-R) un seuil de fiabilité (ThR).

4. Procédé selon la revendication 1, dans lequel ladite étape de génération comprend l'étape consistant à appliquer ledit degré de mouvement dans l'image et lesdits signaux de sommation de différence de vecteur à une mémoire fixe pour déterminer lesdits signaux de commande de mode de traitement de signal d'image comprenant un facteur d'atténuation pour atténuer lesdits vecteurs de mouvement.

5. Appareil pour générer des signaux de commande de mode de traitement de signal d'image à compensation de mouvement, l'appareil comprenant:
des moyens (ME) pour déterminer des premiers vecteurs de mouvement pour une première trame et des deuxièmes vecteurs de mouvement pour une deuxième trame suivante; et
des moyens pour comparer (DT,-) lesdits premiers et deuxièmes vecteurs de mouvement qui sont estimés pour les mêmes positions spatiales dans les première et deuxième trames pour obtenir des différences de vecteur pour lesdites positions spatiales;
**caractérisé par**
des moyens pour sommer (ET) lesdites différences de vecteur pour obtenir des signaux de sommation de différence de vecteur;
des moyens pour déterminer (L, Σ2T) un degré de mouvement dans le signal d'image, et
des moyens pour générer (COMP-R, COMP-A, AND, FF) des signaux de commande de mode de traitement de signal d'image à compensation de mouvement (MC) dépendamment des signaux de sommation de différence de vecteur et du degré de mouvement dans le signal d'image.

6. Appareil selon la revendication 5, dans lequel
lesdits moyens de détermination comprennent des moyens pour déterminer (L, Σ2T) une somme de longueurs desdits premiers et deuxièmes vecteurs de mouvement pour obtenir ledit degré de mouvement dans l'image; et
lesdits moyens de génération comprennent des moyens pour changer (COMP-A, AND, FF) lesdits signaux de commande de mode de traitement de signal d'image à compensation de mouvement (MC) seulement lorsque ledit degré de mouvement dans l'image présente une relation prédéterminée (COMP-A) avec un seuil d'activité (ThA).

7. Appareil selon la revendication 6, dans lequel lesdits signaux de commande de mode de traitement de signal d'image à compensation de mouvement (MC) sont changés pour indiquer un mode de traitement de signal d'image à compensation de mouvement lorsque ledit degré de mouvement dans l'image baisse (COMP-A) au-dessous dudit seuil d'activité (ThA) alors que ledit signal de commande de traitement de signal d'image à compensation de mouvement (MC) est changé pour indiquer un mode de traitement de signal d'image à non-compensation de mouvement lorsque les signaux de sommation de différence de vecteur dépassent (COMP-R) un seuil de fiabilité (ThR).

8. Appareil selon la revendication 5, dans lequel lesdits moyens de génération comprennent une mémoire fixe pour déterminer lesdits signaux de commande de mode de traitement de signal d'image comprenant un facteur d'atténuation pour atténuer lesdits vecteurs de mouvement dépendamment dudit degré de mouvement dans l'image et desdits signaux de sommation de différence de vecteur.

9. Récepteur pour des signaux de télévision, comprenant
des moyens pour recevoir et pour décoder lesdits signaux de télévision pour obtenir des signaux d'image;
des moyens qui sont couplés audits moyens de réception et de décodage pour améliorer lesdits signaux d'image;
**caractérisé en ce que** les moyens d'amélioration comprennent un appareil pour générer des signaux de commande de mode de traitement de signal d'image, tel que défini dans la revendication 5.
